# EUROPEAN PATENT APPLICATION

(11) **EP 1 647 215 A1**
(43) Date of publication of application: **19.04.2006**
(21) Application number: 05108107.3
(22) Date of filing: 05.09.2005
(51) Int. Cl.: A47J 37/06

(54) **Cooking appliance with stationary grate and moveable heat source**

(30) Priority: 18.10.2004 US 967372
(71) Applicant: Grill Whiz LLC, Morrisville NC 27560 (US)
(72) Inventor: Lundh, Anders P., Morrisville, North Carolina 27560 (US); Darai, Pirooz, Morrisville, North Carolina 27560 (US); Alayan, Hussein A., Morrisville, North Carolina 27560 (US)
(74) Representative: Milanov, Nina Vendela Maria

(57) **Abstract**

A cooking device (10) having a base frame (50) having sidewalls (90, 90) and a floor (80) that at least partially define a cooking cavity (140); a lid assembly (30) disposed above the base frame (50) and comprising a cover (100) and a heating unit; a grate (60) disposed in the cooking cavity (140); a collecting (70) pan disposed beneath the grate (60) for collecting drippings from food being cooked; the top unit (30) being displaceable relative to the base frame (50) between a closed position and an open position, wherein, in the open position, the heating unit is disposed out of alignment with the grate (60) and the top unit (30) is disposed so as to allow access to the grate (60) from above, The collecting pan (70) may be disposed so as to remain below 180°F after 20 minutes of cooking with the top unit (38) in the dosed position and the heating unit operating at a Maximum setting.

## Description

### BACKGROUND OF THE INVENTION

The present invention relates to a cooking appliance, more particularly to a cooking appliance that is suitable for grilling and baking food.

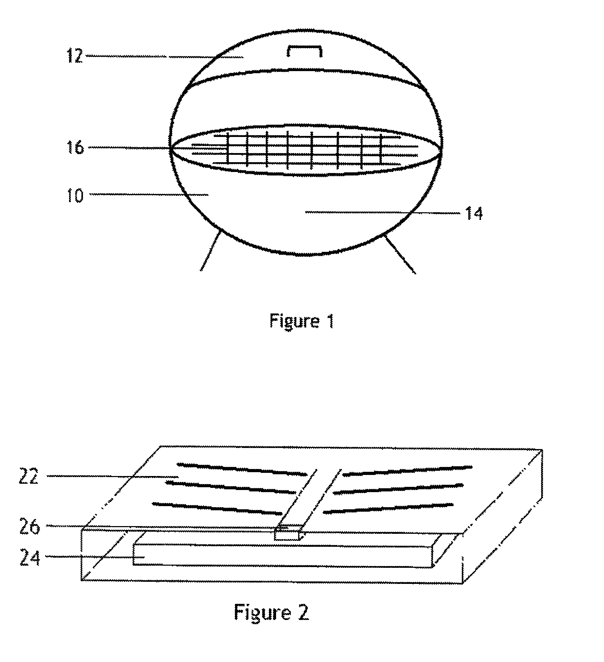

As shown in Figure 1, a conventional cooking grill includes a base unit 10 and a cover unit 12. The base unit 10 consists of a heat resistant material and houses the heating element 14 (e.g., burning coal). The heating element provides heat to the cookware grate 16. The cover unit 12 is made out of a heat resistant material. It is mounted so that it can be closed with the base unit 10 forming an enclosed chamber.

When placing food on the cookware grate 16 and providing heat from the heating element, oil and other fluids tend to drip on to the heating element 14. When the oil and other fluids fall on the heating element 14, the oils and fluids burn and smoke is created, which makes the cooking device unsuitable for indoor usage.

As shown in Figure 2, an additional cookware plate 22 can be mounted above the heating element 24 to prevent the otherwise dripping fluids from reaching the heating element 24. The food is placed on the cookware plate 22 and the recant oils/fluids are drained to the side to a collecting box 26. However, cooking the food directly on the heated cookware plate 22 results in some of the oils/fluids to be cooked with the food thus giving the food a burnt taste.

Using a conventional grill device will cause food to be heated and stick to the heating element or any additional cookware plates. The food that sticks to the heating element or the additional cookware plate are very hard to remove because of its burnt condition. This will cause the cooking device to, over time, accumulate burnt grease, oil or food residue resulting in the user eventually needing to replace the heating element and/or additional cookware plates.

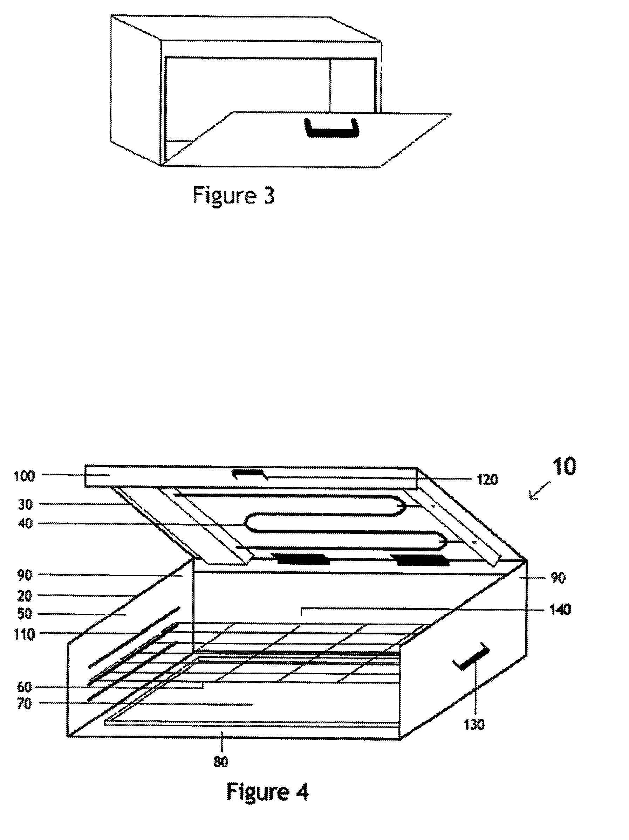

As shown in Figure 3, an oven or toaster is designed as an enclosed chamber where the heat source is located above the food. When using the oven or the toaster as a grill-cooking device and placing food inside the enclosed chamber, the most common and safe way to handle the food is to remove the food from the oven. Removing the food from the oven can be hazardous and cause injuries and discomfort.

### SUMMARY OF THE INVENTION

The present invention, in one embodiment, provides a cooking device, comprising: a base frame having sidewalls and a floor that at least partially define a cooking cavity; a top unit disposed above the base frame and comprising a cover and a heating unit; a grate adapted to support food thereon, the grate disposed in the cooking cavity above the floor and below the top unit; a collecting pan disposed in the cooking cavity above the floor and beneath the grate for collecting drippings from food being cooked on the grate; wherein the top unit is displaceable relative to the base frame between a closed position and an open position, wherein, in the closed position, the heating unit is disposed above and aligned generally parallel with the grate so as to direct heat toward the grate from above and the top unit generally blocks access to the grate from above; wherein, in the open position, the heating unit is disposed out of alignment with the grate and the top unit is disposed so as to allow access to the grate from above.

The top unit may be rotatably coupled to the base frame for rotational displacement with respect thereto between the closed position and the open position, such as by 45°, or advantageously by approximately 180°. A support may be attached to the top unit and operative to support the top unit in a generally horizontal position in the open position. The heating unit may compose at least one electric heating element. The collecting pan may advantageously be removable from the cooking cavity while the top unit is in the closed position. The sidewalls may support the grate. The cooking cavity may be bounded on four sides, by the floor, the sidewalls, and the top unit, with the cooking cavity having front and rear walls that are less than 50% obstructed.

The cooking device may advantageously be portable and further comprise at least one handle attached to at least one of the sidewalls and extending external to the cooking cavity. The collecting pan may advantageously be disposed so as to remain at a temperature below 180°F after 20 minutes of cooking with the top unit in the closed position and the heating unit operating at a maximum setting. Combinations of the above are also envisioned.

### BRIEF DESCRIPTION OF DRAWINGS AND IMAGES

Figure 1 is a drawing of a conventional electric, gas or charcoal-cooking device.
Figure 2 is a drawing of a conventional cooking device with an additional cookware member attached.
Figure 3 is a drawing of a conventional oven/toaster.
Figure 4 is a drawing of the preferred design of the current invention.
Figure 5 is a drawing of the preferred design of the current invention with the top unit retracted 180-degrees relative to the base unit
Figure 6 is a drawing of the preferred design of the current invention with the top unit in a closed position.

### DETAILED DESCRIPTION OF A PREFERRED EMBODIMENT

One embodiment of a cooking device according to the present invention is shown in Figure 4, and generally indicated at 10. The cooking device 10 includes a housing 20, a grate 60, and a collection pan 70. The housing 20 includes a lower base frame 50 and a lid assembly 30. The base frame 50, as shown, assumes a generally U-shaped profile, with a bottom 80 and respective sidewalls 90. and should be made of a suitable heat resistant material such as stainless steel or aluminum. The lid assembly 30 includes a lid or cover 100 with a heating element 40 attached thereto. The heating element 40 may advantageously be in the form of W-shaped electric resistance element of 1700 watts that can heat to at least 1000°F. Alternatively, the heating element 40 may take other forms, such as a gas heat source known in the art. While not required in all embodiments, the lid assembly 30 may advantageously be pivotally mounted to the base frame 50 via one or more hinges or other means for allowing the lid assembly to be displaced relative to the base frame 50.

The cooking device is portable and further has at least one handle 130 attached to the external side of one of the sidewalls 90 of the base frame 50. The handle(s) 130 may be used when transporting the cooking device.

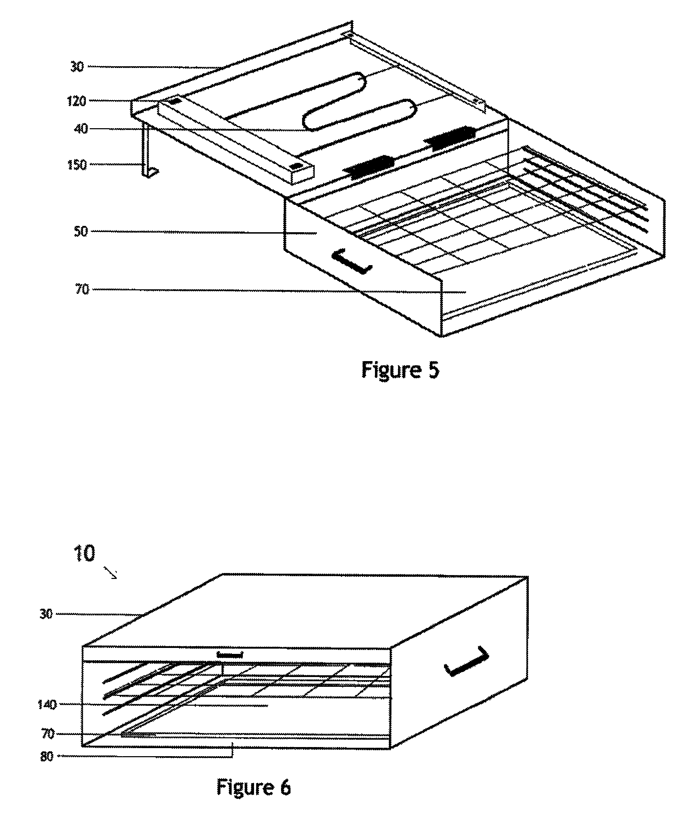

The cover 100 should be made of a heat reflective material such as aluminum. The heat element 40 should be attached to the cover 100 so as to move when the cover 100 moves. Advantageously, as much as possible of the heat generated by the heat element 40 generated is directed toward the grate 60. The cover 100 should be attached to the base frame 50 so that when the cover 100 is in a closed position (Figure 6) it blocks access to the grate 60 from above. Further the cover 100 should be displaceable relative to the base frame 50 to allow access to the grate 60 from above. To this end, the cover 100 may be rotatably coupled to the base frame 50 to allow for rotational displacement of at least 45°, and advantageously approximately 180°, with respect to the base frame 50 between a closed position and an open position. A handle 120 may be mounted on the front side of the cover 100 to aid the user in displacing the lid assembly 30.

The lower portion of the cooking cavity 140 is defined by the space between the sidewalls 90 and bottom 80 of the base frame 50. The upper boundary of the cooking cavity 140 is established by the cover 100 of the lid assembly 30 when the lid assembly 30 is in the closed position.

The grate 60 should be in a form suitable to support food during cooking and should be made from suitable heat resistant materials known in the art. The grate 60 is disposed in the cooking cavity 140, and supported some distance from the heating element 40 by suitable rail type supports 110 on the interior of the sidewalls 90. Alternatively, the grate may be self-supporting on the floor 80 of the cooking cavity 140. The distance between the grate 60 and the heating element 40 can be adjusted to allow for various food to be cooked.

The collecting pan 70 should be made from an easy cleaning material such as stainless steel or aluminum, advantageously with non-stick coating such as TEFLON. The collecting pan 70 rests on the bottom 80 under the grate 60 and is used for collecting drippings from food placed on the grate 60 during cooking. The collecting pan 70 should be located a distance from the heating element 40 so that, while in close position (Figure 6) and after 20 minutes of cooking, it should remain at a temperature below 180°F when the heating element 40 is operating with maximum heat. The small amount of heat to the collecting pan 70 will result in food residue not sticking to the collecting pan and less smoke being generated. The collecting pan 70 can be removed from the bottom 80 when the lid assembly 30 is in a closed or open position to be cleaned separately.

In operation, the grate 60 is positioned in the lower portion of the cooking cavity 140, the collecting pan 70 is positioned beneath the grate 60 in the cooking cavity 140, and the lid assembly 30 is moved to the open position (Figure 4). The food to be cooked is then placed on the grate 60, the lid assembly 30 moved to the dosed position (Figure 6), and the heating element(s) 40 activated. At this time, the desired setting for the heating element(s) 40 may be set via suitable controls known in the art, if provided. Anytime during the cooking the lid assembly 30 can be displaced and the food accessed from above, and then the lid assembly 30 easily repositioned in the cooking position. When the lid assembly 30 is displaced, the heat source 40 is moved away from the food, which allows for more supervision during cooking.

Referring to Figure 5, the lid assembly 30 can be mounted so that it can be retracted to a 180° angle and placed level with the base frame 50. This will allow the lid assembly 30 to be used for various other cooking uses, such as boiling water. The lid assembly 30 may have mounted brackets 120 for supporting an additional cooking plate to be placed on top of the heating source 40. In some embodiments, the collecting pan 70 may be used as the additional cooking plate. Support brackets 150 can be attached to the lid assembly 30 for support when it is in a 180° open position.

Referring to Figure 6, the cooking device 10 should have front and rear walls that are less than 50% obstructed when the lid assembly 30 is in a closed position. This Will allow for air going through the cooking cavity 140 and will limit the amount of heat reaching the bottom 80 and/or the collecting pan 70.

Although the present invention has been described herein with respect to particular features, aspects and embodiments thereof, it will be apparent that numerous various, modifications, and other embodiments are possible within the broad scope of the present invention, and accordingly, all variations, modifications and embodiments are to be regarded as being within the scope of the invention, The present embodiments are therefore to be construed in all aspects as illustrative and not restrictive and all changes coming within the meaning and equivalency range of the appended claims are intended to be embraced therein.

## Claims

1. A cooking device, comprising:
a base frame (50) having sidewalls (90, 90) and a floor (80) that at least partially define a cooking cavity (140):
a top unit (30) disposed above said base frame (50) and comprising a cover (100) and a heating unit:
a grate (60) adapted to support food thereon, said grate (60) disposed in said cooking cavity (140) above said floor (80) and below said top unit (30);
a collecting pan (70) disposed in said cooking cavity (140) above said floor (80) and beneath said grate (60) for collecting drippings from food being cooked on said grate (60):
wherein said top unit (30) is displaceable relative to said base frame (50) between a dosed position and an open position,
wherein, in said closed position, said heating unit is disposed above and aligned generally parallel with said grate (60) so as to direct heat toward said grate (60) from above and said top unit (30) generally blocks access to said grate (60) from above;
wherein, in said open position, said heating unit is disposed out of alignment with said grate (60) and said top unit (30) is disposed so as to allow access to said grate (60) from above.

2. A cooking device according to claim 1, wherein said top unit (30) is rotatably coupled to said base frame (50) for rotational displacement with respect thereto between said dosed position and said open position.

3. A cooking device according to claim 2, wherein said top unit (30) is rotatably coupled to said base frame (50) for rotational displacement with respect thereto of at least 45' between said dosed position and said open position.

4. A cooking device according to claim 2, wherein said top unit (30) is rotatably coupled to said base frame (50) for rotational displacement with respect thereto approximately 180° between said dosed position and said open position.

5. A cooking device according to claim 4, further comprising a support (150) attached to said top unit (30) and operative to support said top unit (30) in a generally horizontal position in said open position.

6. A cooking device according to claim 1, wherein said heating unit comprises at least one electric heating element (40)

7. A cooking device according to claim 1, wherein said collecting pan (70) is removable from said cooking cavity (140) while said top unit (30) is in said closed position

8. A cooking device according to claim 1, wherein said sidewalls (90, 90) support said grate (60).

9. A cooking device according to claim 1. wherein said cooking cavity (140) is bounded on four sides by said floor (80), said sidewalls (90 90), and said top unit (30), with said cooking cavity (140) having front and rear walls that are less than 50% obstructed.

10. A cooking device according to claim 1, wherein said cookrng device is portable and further comprising at least one handle (130) attached to at least one of said sidewalls (90, 90) and extending external to said cooking cavity (140).

11. A cooking device according to claim 1, wherein said collecting pan (70) is disposed so as to remain at a temperature below 180°F after 20 minutes of cooking with said top unit (30) in said closed position and said heating unit operating at a maximum setting.

12. A cooking device according to claim 1:
wherein said top unit (30) is rotatably coupled to said base frame (50) for rotational displacement with respect thereto of at least 45° between said closed position and said open position;
wherein said heating unit comprises at least one electric heating element (40);
wherein said collecting pan (70) is removable from said cooking cavity (140) while said top unit (30) is in said closed position: and
wherein said cooking cavity (140) is bounded on four sides by said floor (80), said sidewalls (90, 90), and said top unit (30), with said cooking cavity (140) having front and rear walls that are less than 50% obstructed.

13. A cooking device according to claim 12:
wherein said top unit (30) is rotatably coupled to said base frame (50) for rotational displacement with respect thereto of approximately 180° between said closed position and said open position; and
further compnsing a support attached to said top unit (30) and operative to support said top unit (30) in a generally horizontal position in said open position.

14. A cooking device according to claim 12, wherein said collecting pan (70) is disposed so as to remain at a temperature below 180°F after 20 minutes of cooking with said top unit (30) in said closed position and said heating unit operating at a maximum setting.
